# EUROPEAN PATENT APPLICATION

(11) **EP 3 563 926 A1**
(43) Date of publication of application: **06.11.2019**
(21) Application number: 18174361.8
(22) Date of filing: 25.05.2018
(51) Int. Cl.: B01D 53/86, B01D 53/90

(54) **APPARATUS AND METHOD FOR REMOVING OF NITROGEN OXIDES AND CARBON MONOXIDE FROM EXHAUST GAS USING CATALYTIC PURIFICATION OF GAS EMISSIONS**

(30) Priority: 30.04.2018 LT 2018517
(71) Applicant: Vilniaus Gedimino technikos universitetas, 10223 Vilnius (LT)
(72) Inventor: BALTRENAS, Pranas, 07143 Vilnius (LT); URBANAS, Davyd, 10223 Vilnius (LT)
(74) Representative: Pranevicius, Gediminas

(57) **Abstract**

The invention relates to apparatus and methods for gas emissions catalytic purification, in particular to removal of nitrogen oxides NOₓ and carbon monoxide CO from gas emissions. The apparatus for the purification of gas emissions comprises two catalysts (CO oxidation and NOₓ reduction) located sequentially, which contain the catalytic grains load operating during the purification of gas emissions as a fluidized bed which is formed by the impact of the recirculating gas flow on the catalytic load. In order to realize the constant maintenance of the required ratio between the volumetric rates of the main gas emission flow and recirculating gas flow the apparatus is equipped with the measuring sensors and control unit providing the automatic regulation of recirculating flows volumetric rate. The substrate material of the catalytic grains is made of the expanded clay aggregate or the volcanic stone and coated with the active layer made of transition metal oxides (bimetallic or polymetallic oxide). Under the influence of the recirculating gas flow on the catalytic load, the moving catalyst providing the good contact of the catalytic grains with the gas emissions components CO and NOₓ, thereby the effective conversion of CO and NOₓ into carbon dioxide CO₂ and molecular nitrogen N₂ occurs.

## Description

### TECHNICAL FIELD

The invention relates to apparatus and methods for catalytic purification of gas emissions, in particular to the purification of gas emissions by removing nitrogen oxides and carbon monoxide with the use of recirculating gas flows.

### BACKGROUND ART

Apparatus for catalytic purification of gas emissions by removing nitrogen oxides and carbon monoxide can be applied for the gas emissions purification in large thermal power plants, local heating systems (ovens, gas and solid fuel boilers) as well as industrial facilities (chemical industry, oil refining, metal production).

Due to the high efficiency and simplicity from a technological point of view, the method of selective catalytic conversion is widely used in the field of gas emissions purification from NOₓ and CO. According to the accommodation technique inside the gas purification apparatus all catalysts can be divided into the block and load types. The block catalysts have a certain fixed shape while the load-type catalysts occupy the operating volume which they are loaded into for the further use during the gas purification.

Depending on the configuration the following main three groups of catalysts can be considered: foam, honeycomb and porous. The first two groups relate to the block-type while the latter to the load-type. The honeycomb catalysts which have a lot of small parallel channels can provide a low aerodynamic resistance during the gas emissions purification process and thus they can be successfully used in objects with high volumetric flow rates. Porous catalysts due to their structure have a higher coefficient of mass transfer and therefore they are able to provide a higher efficiency of gas purification, but their significant disadvantage is a much greater aerodynamic resistance created during the gas purification process which limits the possibility of their widespread use. Thus it is necessary to develop the apparatus for the purification of gas emissions which allows to use the porous catalysts and provides the low aerodynamic resistance.

The prototype of the present invention is the catalytic apparatus of gas purification which is described in the Chinese patent application CN102658025. The invention presented in this patent application is aimed at the purification of gas emissions, in particular at the reduction of nitrogen oxides to the molecular nitrogen N₂. The apparatus for the purification of gas emissions of NOₓ comprises a waste heat boiler, an ammonia/air mixer, an ammonia injecting device, a catalyst which constitutes a fixed bed and a chimney.

The ammonia injecting device and the catalytic bed according to the said patent application are located either at the end of the waste heat boiler upstream of the chimney or in a separately constructed connecting channel that is located parallel to the chimney and has a direct connections whit it in lower and upper parts.

The contaminated gas flow from the waste heat boiler is mixed with the reductant (ammonia), which is injected into the contaminated gas removal system upstream of the catalyst, then contaminated gas passes through the catalyst where the reduction of nitrogen oxides with the formation of N₂ and H₂O proceeds, after that the purified gas is released through the chimney to the atmosphere.

The main disadvantage of the said prototype is that the use of the fixed bed catalyst for the gas emissions purification leads to the formation of large aerodynamic resistance which in turn significantly reduces the performance of whole gas purification system thus making problematical the use of such system on large fuel combustion objects. Furthermore, due to the use of a fixed bed the elements of catalytic load adjoin each other and consequently only a part of their surface is used during the contaminants (NOₓ, CO) conversion.

### SUMMARY OF THE INVENTION

The object of the present invention is to develop an apparatus for gas emissions purification from nitrogen oxides (NOₓ) and carbon monoxide (CO) with the use of load-type catalysts, which provide the high purification efficiency without the system performance reducing.

The simultaneous removal of nitrogen oxides and carbon monoxide from the gas flow can be realized by the sequential installation of two catalysts (oxidation and reduction) that is not a scientific or technical novelty and thus is not emphasized in this invention. The specialty of the gas purification apparatus described in the present invention is the formation of a moving grain catalyst, which works as a fluidized bed. The formation of the fluidized bed is proposed to be realized by the impact of the compressed directional flow of the recirculating gas on the catalytic bed. The fluidized bed catalyst provides a significant gas purification efficiency with much lower aerodynamic resistance in comparison with the fixed bed catalyst.

In the present invention the catalytic load is placed on the small-meshed grate (the mesh size is 1.0-2.0 mm) which is located along the contaminated gas removal channel. Under the influence of the recirculating gas created by specially installed pumps the catalytic load transforms into the fluidized bed which provides the good contact between the catalytic grains and target components (NOₓ and CO) of the gas emissions flow resulting in effective their conversion. The catalytic load is restricted from the both sides by the vertical small-meshed grates which shape is identical to the inner cross-section form of oxidation and reduction catalysts.

In the apparatus of gas emissions purification from NOₓ and CO with the use of moving catalytic layer the oxidation (for the CO oxidation) and the reduction (for the NOₓ reduction) catalysts are installed sequentially inside the contaminated gas removal channel and as in traditional technological schemes the reductant injection into the contaminated gas removal channel is provided upstream of the reduction catalyst.
As a substrate for the active coating formation of the catalytic grains such materials as expanded clay aggregate and volcanic stone are proposed in the present invention. These materials have a large porosity and highly developed surface, which significantly impact on the efficiency. The additional advantage of proposed substrate materials is that for the formation of an active coating the pre-treatment of their surface is not needed. Moreover, the expanded clay aggregate is made from the natural clay and the volcanic stone is a solidified magma (the product of volcanic activity), thus both these materials are economically feasible and available. The high porosity of both the expanded clay aggregate and the volcanic stone also provides the lightness of catalytic grains which allows to form the fluidized bed easier.

As an active coating the already known transition metal oxides such as oxides of Mn, Ti, V, Fe, Cu, Mo, W and others can be used taking into account the fact that bimetallic and composite oxide catalysts are more effective in comparison with monoxide catalysts.

### BRIEF DESCRIPTION OF DRAWINGS

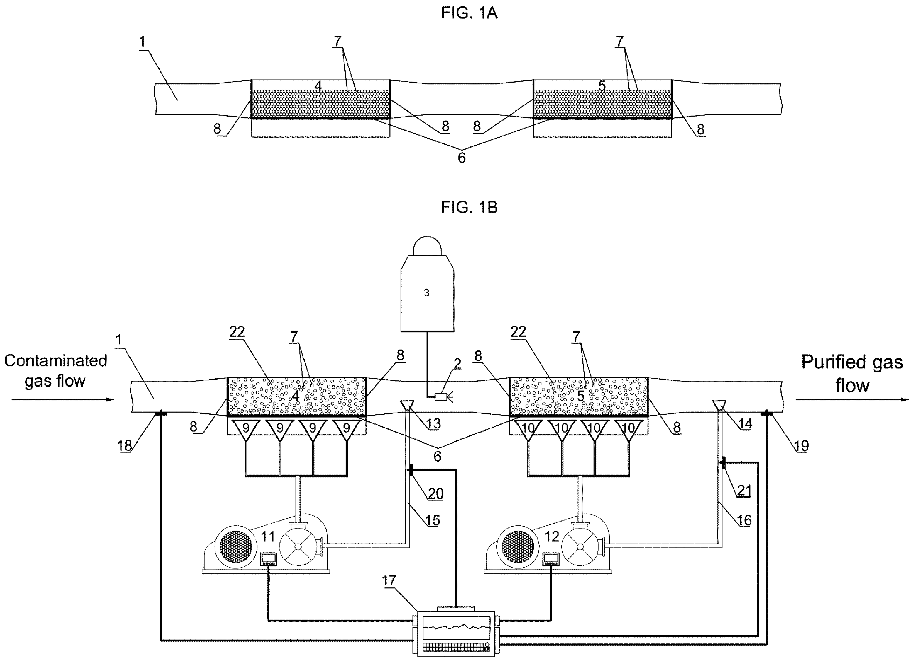

FIG. 1A is a schematic view of the apparatus for catalytic purification of gas emissions from nitrogen oxides and carbon monoxide in an inactive state.
FIG. 1B is a schematic view of the apparatus for catalytic purification of gas emissions from nitrogen oxides and carbon monoxide in operation.

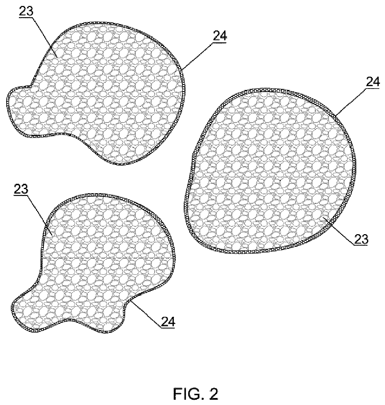

FIG. 2 is the a schematic view of the catalytic grains.

### DETAILED DESCRIPTION OF THE INVENTION

The apparatus for gas purification comprises: the contaminated gas removal channel 1; the device 2 for the injecting of a reductant 3 into the contaminated gas removal channel 1; oxidation 4 and reduction 5 catalysts installed sequentially inside the contaminated gas removal channel which are the chambers with the rectangular cross-section divided by the stainless steel grate 6 (the mesh size is 1-2 mm) in such a manner that above the grates 6 the load of catalytic grains 7 is placed, which is restricted from the both sides by the vertical small-meshed grates 8 which have the shape identical to the inner cross-section form of oxidation 4 and reduction 5 catalysts, and under the grates 6 the gas manifolds 9 and 10 are located for supplying of the directional flow of the recirculating gas, which intake is realized by the pumps 11 and 12 with the use of intake manifolds 13 and 14 and gas conduits 15 and 16; the unit 17 for the automatic regulation of the volumetric flow rate of the recirculating gas depending on the volumetric rate of the main gas emissions flow; sensors 18 and 19 located inside the contaminated gas removal channel 1 upstream and downstream of the catalysts 4 and 5 respectively for the measuring the volumetric rate of the main gas emissions flow; sensors 20 and 21 located inside the gas conduits 15 and 16 for the measuring of volumetric flow rate of the recirculating gas downstream the oxidation catalyst 4 and reduction catalyst 5 respectively. The directional flow of the recirculating gas is created in order to form the fluidized bed 22 from the catalytic grains 7.

The catalytic grains 7 forming the fluidized bed 22 have a size of 4-6 mm in diameter, the grains 7 consist of a substrate material 23, such as an expanded clay aggregate, volcanic stone, covered with the active coating 24 made of the transition metal oxides (bimetallic or polymetallic oxide coating).

### The operation principle of the apparatus

The purification of gas emissions from nitrogen oxides and carbon monoxide is carried out inside the moving catalytic bed 22. The gas flow, which contains NOₓ and CO, enters the contaminated gas removal channel 1 where the load-type moving catalysts (the oxidation catalyst 4 and reduction catalyst 5) are located sequentially. The reductant 3, required for the conversion of NOₓ, is injected into the contaminated gas removal channel 1 through the device 2 between the oxidation catalyst 4 and reduction catalyst 5. The fluidized bed 22 made of the catalytic grains 7 is formed by the directional flow of the recirculating gas. Catalytic grains 7 are loaded in such a manner that to fill 30% - 50% of the free vertical space. The directional recirculating flow is created by the pumps 11 and 12, which realize the gas intake downstream of the catalyst 4 and catalyst 5 with the use of intake manifolds 13, 14, continues its recirculation through the gas conduits 15, 16 and blowing out through the gas manifolds 9, 10 under the grates 6 with the bed of catalytic grains 7. In such a manner the recirculating gas insures the continuous chaotic motion of the catalytic grains 7. An important condition that ensures the operation of the apparatus is the maintenance of the correct ratio between the rates of the main and recirculating flows. In this case the volumetric rate of the main flow should exceed the total volumetric rate of two recirculating flows (downstream of the oxidation catalyst 4 and downstream of the reduction catalyst 5). In order to realize the constant maintenance of the required ratio of volumetric flow rates, the apparatus is equipped with the measuring sensors 18 and 19 located in the contaminated gas removal channel 1 upstream of the catalyst 4 and downstream of the catalyst 5 respectively, and also with sensors 20 and 21 located in the gas conduits 15 and 16 downstream of the oxidation catalyst 4 and reduction catalyst 5 respectively. The unit 17 receives data about the volumetric rates of the main and recirculating flows from the measuring sensors 18, 19, 20, 21 and automatically adjusts the operation of the pumps 11 and 12 based on the predetermined ratio of volumetric rates. The realizing of a separate gas intake downstream of the catalyst 4 and downstream of the catalyst 5 is extremely important in terms of the different operating conditions of the oxidation and reduction catalysts. During the purification process the contaminated gas primarily passes through the oxidation catalyst 4 where the carbon monoxide is oxidized to CO₂, after that the gas flow is divided into two parts, one of them goes to the reduction catalyst 5 and another part, which constitutes a recirculating gas flow, goes back to the oxidation catalyst 4 and forms the fluidized bed from the catalytic grains 7. Upstream of the reduction catalyst 5 and downstream of the oxidation catalyst 4 and the intake manifold 13, the reductant 3 needed for the NOₓ reduction is injected into the contaminated gas removal channel 1 through the device 2. When the gas flow passes through the reduction catalyst 5 the NOₓ conversion to molecular nitrogen N₂ proceeds after which one part of the purified gas is released into the atmosphere and another part, which constitutes a recirculating gas flow, goes back to the reduction catalyst 5 in order to form the fluidized bed from the catalytic grains 7. The recirculation processes proceed repeatedly. An additional advantage of the fluidized bed formation by the directional flow of the recirculating gas is that the recycle gas is also purified repeatedly inside the catalyst body.

As a result of applying the moving fluidized bed catalysts the high efficiency of gas purification at low resistance is provided due to the full contact between the gas flow and the whole surface of catalytic grains. Moreover the catalytic fluidized bed of the reduction catalyst 5 simultaneously operates as a dynamic mixer which ensures the effective mixing of the injected reductant with the gas emissions flow.

## Claims

1. An apparatus for removing nitrogen oxides and carbon monoxide from gas emissions comprising a contaminated gas removal channel; a device for injecting a reductant into the contaminated gas removal channel; oxidation and reduction catalysts with the load of catalytic grains located within, **characterized in that** the catalysts (4) and (5) are the chambers of a rectangular cross-section divided along by a horizontal stainless steel grate (6) in such a manner that above the grates (6) the load of catalytic grains (7) is placed, and under the grates (6) the gas manifolds (9, 10) are located for supplying the directional flow of the recirculating gas which intake is realized by the pumps (11, 12) through the intake manifolds (13, 14) and gas conduits (15, 16).

2. The apparatus according to claim 1, **characterized by** comprising the sensors (18, 19) located inside the contaminated gas removal channel (1) for measuring the volumetric rate of the main gas emissions flow upstream the oxidation catalyst (4) and downstream the reduction catalyst (5) respectively, and the sensors (20, 21) located inside the gas conduits (15, 16) for measuring the volumetric flow rate of the recirculating gas downstream the oxidation catalyst (4) and reduction catalyst (5) respectively.

3. The apparatus according to claim 1, **characterized by** comprising the unit (17) for the automatic regulation of the volumetric flow rate of the recirculating gas in the way that the total volumetric rate of two recirculating gas flows does not exceed the volumetric rate of the main gas emissions flow.

4. The apparatus according to claim 1, **characterized in that** the catalysts (4, 5) are connected to the contaminated gas removal channel (1) with their upper parts only which are located above the small-meshed grates (6) with catalytic grains (7).

5. The apparatus according to claim 1, **characterized in that** the both sides of the catalysts (4, 5) are closed by the small-meshed grates (8) which shape is identical to the inner cross-section form of the oxidation and reduction catalysts (4, 5).

6. The apparatus according to claim 1, **characterized in that** the mesh diameter of the grates (8) and (6) is 1.0 to 2.0 mm.

7. The apparatus according to claim 1, **characterized in that** the size of catalytic grains (7) is in the range of 4.0-6.0 mm in diameter.

8. A method of gas emissions purification from nitrogen oxides and carbon monoxide comprising the oxidation of carbon monoxide CO to the carbon dioxide CO₂ and reduction of nitrogen oxides NOₓ to the molecular nitrogen N₂, **characterized in that** during the purification of gas emissions, the load of catalytic grains (7) is being chaotically moved and acting as a fluidized bed (22) created by a compressed directional flow of the recirculating gas.

9. The method according to claim 8, **characterized in that** the intensity of the motion of the catalytic fluidized bed (22) and consequently the purification efficiency of gas emissions are regulated by changing the pressure of the directional flow of the recirculating gas created with pumps (11) and (12).

10. The method according to claim 8, **characterized in that** the low flow rates of the recirculating gas are sufficient for the formation of the catalytic fluidized bed (22) due to the lightness of the catalytic grains (7).

11. The method according to claim 8, **characterized in that** the directional flow of the recirculating gas not only provides the formation of the catalytic fluidized bed (22) but also undergoes a repeated purification by repeatedly passing through the catalytic grains (7).

12. The method according to claim 8, **characterized in that** the catalytic fluidized bed (22) of the reduction catalyst (5) simultaneously operates as a dynamic mixer of the injected reductant (3) with the gas flow components.

13. The method according to claim 8, **characterized in that** the vertical space above the small-meshed grates (6) of the catalysts (4, 5) is filled with the catalytic grains (7) by 30-50%, and the contact of the catalytic grains (7) with the gas emissions flow is provided by their chaotic motion.

14. The method according to claim 8, **characterized in that** as the substrate material (23) of the active coating (24) of the catalytic grains (7), a high porosity materials are used, preferably the expanded clay aggregate or the volcanic stone.
